Europäisches Patentamt

European Patent Office

Office européen des brevets

(19)

(11) **EP 0 598 155 B1**

(12) **FASCICULE DE BREVET EUROPEEN**

(45) Date de publication et mention
de la délivrance du brevet:
**03.07.1996 Bulletin 1996/27**

(51) Int. Cl.⁶: **B62D 11/04**, B62D 6/00

(21) Numéro de dépôt: **92403080.2**

(22) Date de dépôt: **17.11.1992**

(54) **Procédé et dispositif de commande du virage d'un véhicule chenillé ou à roues non directrices**

Lenkverfahren und -vorrichtung zur Kurvensteuerung eines Fahrzeugs mit nicht-gelenkten Rädern oder mit Raupenketten

Turn controlling method and device for vehicle with non-steered wheels or tracks

(84) Etats contractants désignés:
**DE GB IT SE**

(43) Date de publication de la demande:
**25.05.1994 Bulletin 1994/21**

(73) Titulaire: **GIAT Industries**
**F-78034 Versailles Cédex (FR)**

(72) Inventeur: **Urvoy, Emile**
**F-91470 Roussigny, Limours (FR)**

(74) Mandataire: **Ramey, Daniel et al**
**Cabinet Ores**
**6 Avenue de Messine**
**75008 Paris (FR)**

(56) Documents cités:
**FR-A- 2 549 433**          **FR-A- 2 599 869**
**FR-A- 2 681 449**          **US-A- 4 520 299**

• **PATENT ABSTRACTS OF JAPAN vol. 014, no. 399**
**(M-1017)29 août 1990 & JP-A-21 51 576 (HONDA**
**MOTOR) 11 juin 1990**

## Description

L'invention concerne un procédé et un dispositif de commande du virage d'un véhicule chenillé ou à roues non directrices.

De façon générale, l'invention s'applique aussi bien aux véhicules de ce type pilotés par des conducteurs installés à bord des véhicules, qu'aux véhicules pilotés à distance par télécommande.

Les véhicules chenillés ou à roues non directrices sont équipés de moyens de commande différentielle de leurs chenilles ou de leurs roues, qui leur permettent de virer par augmentation du couple moteur ou de la vitesse de la chenille extérieure ou des roues extérieures, et freinage de la chenille intérieure ou des roues intérieures, la vitesse du véhicule pouvant être maintenue en virage par récupération de l'énergie de freinage de la chenille intérieure ou des roues intérieures. La vitesse différentielle des chenilles ou des roues peut être pilotée directement, de façon continue ou discontinue, ce qui permet d'améliorer le contrôle du virage du véhicule.

Toutefois, ces moyens connus ne permettent pas de conserver le contrôle du véhicule dans un domaine de virages allant jusqu'au début d'un dérapage ou d'un survirage, en particulier à grande vitesse. Cet inconvénient, qui limite les performances d'évolution des véhicules chenillés ou à roues non directrices, est encore aggravé par le fait qu'une diminution de l'accélération du véhicule ou son freinage accentue brutalement le survirage.

L'invention a pour objet d'augmenter les possibilités de contrôle de virage d'un véhicule chenillé ou à roues non directrices, et d'améliorer sa stabilité en virage, en particulier à l'approche d'un départ en survirage.

Corollairement, l'invention a pour objet d'augmenter les performances d'évolution d'un véhicule de ce type, notamment d'un véhicule blindé à usage militaire.

Elle propose, à cet effet, un procédé de commande du virage d'un véhicule chenillé ou à roues non directrices, qui comprend des moyens de commande différentielle de ses chenilles ou de ses roues, ce procédé étant caractérisé en ce qu'il consiste à produire un signal de consigne de virage, destiné à être transmis aux moyens de commande précités, à partir d'un ordre de virage donné par un opérateur ou un conducteur du véhicule, à détecter la vitesse angulaire instantanée de lacet du véhicule, à amplifier avec un gain déterminé le signal représentant cette vitesse détectée, à comparer le signal amplifié au signal de consigne de virage et à transmettre leur différence aux moyens de commande précités, afin d'assurer la stabilité du virage du véhicule en effectuant automatiquement un contre-braquage à la détection d'un début de survirage du véhicule.

Le départ du véhicule en survirage peut être provoqué par un ordre de resserrement du virage, ou par une augmentation de la vitesse du véhicule dans un virage à rayon constant, ou encore par la diminution de l'adhérence du véhicule sur le sol, ou bien par la nécessité de devoir freiner en cours de virage.

La mesure de la vitesse angulaire instantanée de lacet du véhicule et son amplification par un gain déterminé de façon particulière permettent de détecter le départ du véhicule en survirage et de le contrôler immédiatement par réduction de la consigne de virage donnée par le conducteur ou l'opérateur, c'est-à-dire en effectuant automatiquement un contre-braquage qui s'oppose au survirage.

Il en résulte une augmentation très sensible des performances contrôlables d'évolution des véhicules chenillés ou à roues non directrices, notamment au niveau de leur vitesse maximale de déplacement en ligne droite ou en virage.

Le procédé selon l'invention est également caractérisé en ce qu'il consiste à faire varier le gain d'amplification du signal de vitesse angulaire de lacet du véhicule, ce gain ayant une valeur sensiblement nulle pour un domaine de comportement naturellement stable du véhicule en virage, et augmentant rapidement à l'approche d'un domaine de comportement instable du véhicule en virage.

De cette façon, l'ordre de virage donné par le conducteur ou l'opérateur du véhicule n'est sensiblement pas modifié lorsque le véhicule se déplace dans des conditions où il peut virer de façon naturellement stable, tandis que cet ordre de virage est corrigé automatiquement, de façon plus ou moins importante, lorsqu'il tend à amener le véhicule dans un domaine de comportement instable ou lorsqu'une diminution brusque de l'adhérence du véhicule sur le sol est détectée.

Dans un premier mode de réalisation de l'invention, ce procédé consiste à déterminer le gain d'amplification précité à partir du rapport des efforts latéraux exercés par le sol sur les roues d'extrémités ou sur les galets d'extrémités des chenilles du véhicule, respectivement à l'avant et à l'arrière du véhicule.

On a en effet constaté que ce rapport a une valeur minimale dans un domaine de comportement naturellement stable du véhicule en virage, et qu'il augmente rapidement jusqu'à une valeur maximale à l'approche d'un domaine d'instabilité, quelle que soit la cause de cette dernière. L'invention prévoit donc, avantageusement, d'utiliser ce rapport pour calculer le gain d'amplification de la vitesse angulaire instantanée de lacet du véhicule.

Selon une variante de l'invention, ce gain d'amplification peut également être déterminé à partir de l'accélération linéaire latérale du véhicule, de l'accélération angulaire de lacet et de l'effort différentiel de commande des roues ou des chenilles du véhicule en virage.

Ces accélérations peuvent être mesurées directement au moyen de capteurs appropriés, ou bien être calculées à partir de la vitesse angulaire de lacet et de la vitesse d'avancement du véhicule.

L'invention propose également un dispositif de commande du virage d'un véhicule chenillé ou à roues non directrices, ce véhicule comprenant des moyens de commande différentielle de ses chenilles ou de ses roues, le dispositif

EP 0 598 155 B1

étant caractérisé en ce qu'il comprend des moyens de génération d'un signal de consigne de virage, correspondant à un ordre de virage donné par un opérateur ou un conducteur du véhicule, des moyens gyrométriques de détection de la vitesse angulaire instantanée de lacet du véhicule et de génération d'un signal correspondant, des moyens d'amplification de ce signal de vitesse angulaire avec un gain déterminé, et des moyens d'établissement de la différence entre le signal de consigne de virage et le signal amplifié de vitesse angulaire de lacet, cette différence étant transmise aux moyens de commande précités.

Selon une autre caractéristique de l'invention, ce dispositif comprend des moyens de génération d'un gain variable d'amplification du signal de vitesse angulaire de lacet, ce gain ayant une valeur sensiblement nulle pour un domaine de virages naturellement stables du véhicule, et augmentant rapidement à l'approche d'un domaine de virages instables du véhicule.

Les moyens de génération de gain peuvent comprendre des moyens de détermination des efforts latéraux exercés par le sol sur les roues d'extrémités ou sur les galets d'extrémités des chenilles à l'avant et l'arrière du véhicule, et des moyens de calcul du rapport de ces efforts latéraux.

Pour déterminer ces efforts latéraux, on peut utiliser par exemple des jauges de contrainte fixées sur les bras de suspension des roues et des galets des chenilles.

En variante, les moyens de génération de gain comprennent des moyens de détermination de l'accélération linéaire latérale du véhicule, des moyens de mesure de l'effort différentiel de commande des roues ou des chenilles du véhicule en virage, et des moyens de calcul, a partir de ces informations, d'un gain variant sensiblement comme celui obtenu à partir du rapport précité des forces latérales exercées par le sol à l'avant et à l'arrière du véhicule sur les roues d'extrémités ou les galets d'extrémités des chenilles.

On peut en particulier utiliser des accéléromètres pour mesurer les accélérations linéaires latérales à l'avant et à l'arrière du véhicule.

En variante, les moyens de calcul permettent de déterminer le gain à partir de la vitesse angulaire de lacet, de la vitesse d'avancement du véhicule et de l'effort différentiel de commande des roues ou des chenilles.

L'invention sera mieux comprise et d'autres caractéristiques, détails et avantages de celle-ci apparaîtront plus clairement à la lecture de la description qui suit, faite en référence aux dessins annexés, dans lesquels :

la figure 1 est une vue très schématique de dessus d'un véhicule chenillé, en virage à droite;
la figure 2 est un diagramme représentant les domaines de stabilité et d'instabilité du véhicule en virage,
la figure 3 représente schématiquement un dispositif selon l'invention pour le contrôle de virage du véhicule;
la figure 4 est un graphe représentant la variation du rapport des forces latérales exercées par le sol sur les galets d'extrémités avant et arrière des chenilles du véhicule;
la figure 5 représente schématiquement un bras de suspension d'un galet du véhicule;
les figures 6 et 7 représentent schématiquement des variantes du dispositif selon l'invention.

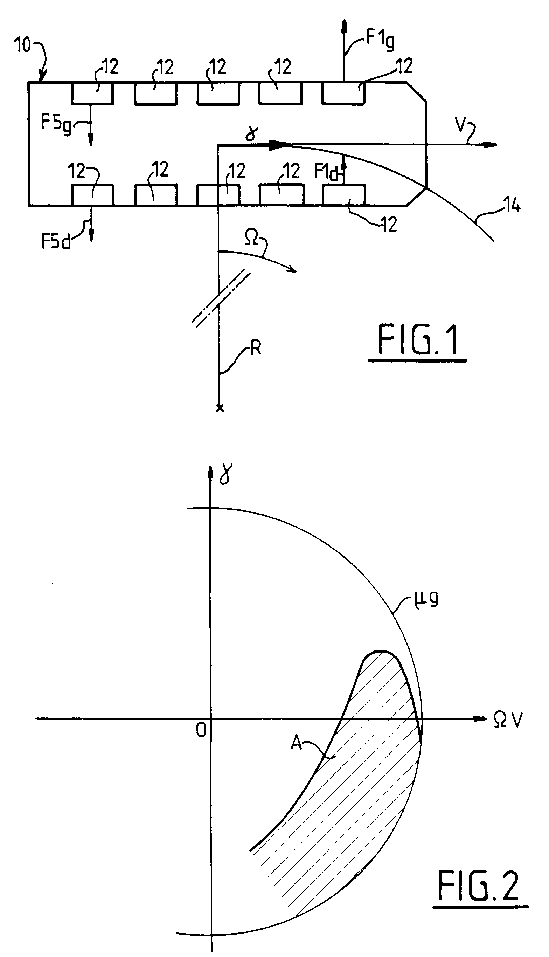

On a représenté très schématiquement en figure 1 un véhicule chenillé 10 qui, de façon classique, comporte deux rangées de galets 12 par lesquels il repose sur les brins inférieurs des chenilles, qui sont elles-mêmes entraînées par des barbotins. Quand le véhicule vire à droite pour suivre une trajectoire courbe 14 de rayon R, ce virage étant effectué par augmentation de la vitesse ou de l'effort moteur sur la chenille de gauche et freinage de la chenille droite, le véhicule pivote autour d'un point situé sur son axe longitudinal et le sol exerce sur les galets 12 d'extrémités avant et arrière des efforts latéraux que l'on a désigné par F1g, F1d, F5g, F5d respectivement en figure 1. Dans cette figure, on a également représenté schématiquement par V la vitesse linéaire d'avancement du véhicule, et par $\Omega$ la vitesse angulaire sur la trajectoire courbe 14.

De façon générale, le comportement du véhicule chenillé en virage dépend des variations de sa vitesse linéaire V, de sa vitesse angulaire $\Omega$ sur sa trajectoire, et de son coefficient $\mu$ d'adhérence au sol.

La figure 2 est un diagramme illustrant les domaines de comportements stable et instable respectivement du véhicule, dans un système d'axes orthogonaux où l'accélération centripète $\Omega$ V du véhicule est portée en abscisse, et son accélération linéaire $\gamma$ en ordonnée. Le cercle de rayon $\mu$g représente l'accélération maximale du véhicule sur le sol, $\mu$ étant le coefficient d'adhérence du véhicule sur le sol et g l'accélération de la pesanteur. A l'intérieur de ce cercle, la zone hachurée A représente le domaine d'instabilité du véhicule en virage. Dans ce domaine d'instabilité, le véhicule part naturellement en survirage et referme progressivement sa trajectoire. On voit sur le diagramme de la figure 2 qu'une accélération importante permettrait de sortir de ce domaine d'instabilité, mais la puissance disponible est en général insuffisante, à vitesse élevée, pour accélérer fortement.

On voit également sur le diagramme de la figure 2 qu'un freinage du véhicule à l'approche du domaine d'instabilité déplace le point de fonctionnement du véhicule dans le domaine instable et provoque un départ en survirage. Il en est de même si, au cours d'un virage, le coefficient d'adhérence du véhicule sur le sol diminue brusquement.

L'invention a précisément pour objet des moyens de commande du virage d'un véhicule chenillé (ou d'un véhicule à roues non directrices) qui permettent d'amener le véhicule à respecter les consignes d'avancement et de virage qu'il reçoit, tant qu'il reste dans son domaine de stabilité naturelle représenté par la partie non hachurée à l'intérieur du cercle en figure 2, et de modifier la consigne de virage lorsque celle-ci combinée à la consigne d'avancement l'entraînerait dans le domaine d'instabilité (zone hachurée A).

L'invention est basée essentiellement sur la détection du départ en survirage du véhicule et sur la correction instantanée de la consigne de virage qui provoque ce départ en survirage.

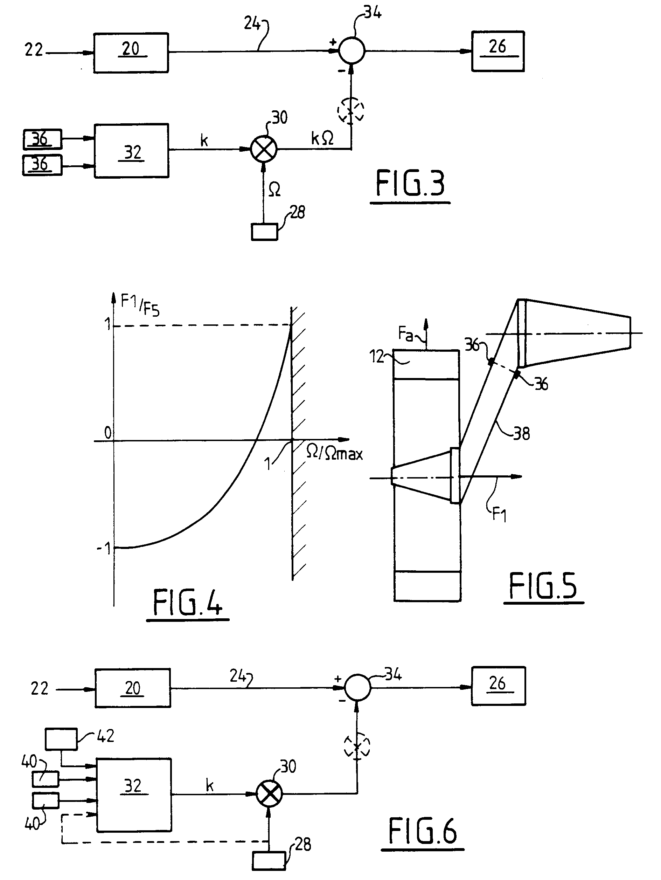

Le dispositif de commande selon l'invention, dont un exemple de réalisation est représenté en figure 3, comprend des moyens 20 recevant un ordre de virage 22 donné par l'opérateur ou le conducteur du véhicule et le transformant en un signal 24 de consigne de virage destiné à être appliqué à des moyens 26 de commande différentielle des chenilles droite et gauche du véhicule, tels par exemple qu'un groupe hydrostatique de commande directe de la vitesse différentielle des chenilles.

Ce dispositif comprend également un capteur gyrométrique 28 monté sur le véhicule et produisant en sortie un signal $\Omega$ représentant la vitesse angulaire instantanée de lacet du véhicule, ce signal étant appliqué à une entrée d'un multiplicateur 30 dont une autre entrée reçoit un coefficient ou gain d'amplification k produit par des moyens de calcul 32. La sortie du multiplicateur 30 est reliée à l'entrée négative d'un circuit soustracteur 34, dont l'entrée positive reçoit le signal 24 de consigne de virage et dont la sortie est reliée à l'entrée des moyens 26 de commande différentielle des chenilles. Eventuellement, et comme représenté en pointillés, un amplificateur de mise à niveau peut être interposé entre la sortie du multiplicateur 30 et l'entrée négative du soustracteur 34.

Avantageusement, le gain d'amplification k de la vitesse angulaire instantanée de lacet du véhicule est variable en fonction des conditions de déplacement du véhicule, ce gain ayant une valeur sensiblement nulle dans le domaine de comportement stable du véhicule en virage et augmentant rapidement jusqu'à une valeur maximale prédéterminée à l'approche du domaine de comportement instable du véhicule en virage.

Dans un premier mode de réalisation de l'invention, ce gain k est obtenu à partir des efforts latéraux exercés par le sol sur les galets d'extrémités avant et arrière du véhicule.

Ce rapport est égal à $(F1g+F1d)/(F5g+F5d)$ si l'on reprend les notations de la figure 1. En fait, ce rapport sera désigné dans ce qui suit par F1/F5, car il varie sensiblement comme F1g/F5d quand le véhicule vire à droite, F1d et F5g ayant tendance a diminuer et à s'annuler dans ce cas, et, inversement lorsque le véhicule vire à gauche, ce rapport varie comme F1d/F5g.

La variation de ce rapport F1/F5 est représentée en figure 4 en fonction du rapport $\Omega/\Omega max$ (rapport de la vitesse angulaire instantanée de lacet du véhicule et de la valeur maximale possible de cette vitesse). On voit que ce rapport F1/F5 est approximativement égal à -1 quand le véhicule se déplace en ligne droite, qu'il passe par une valeur nulle quand la vitesse angulaire de lacet du véhicule est égale à environ 80% de sa valeur maximale, et qu'il tend vers 1 au voisinage de la valeur maximale de la vitesse angulaire de lacet du véhicule.

Le gain k d'amplification de la vitesse angulaire instantanée de lacet du véhicule est donné par la relation $k = a + F1/F5$ , a étant une constante voisine de 1, et varie donc entre les valeurs 0 et 2 environ, en augmentant lentement à partir de zéro dans le domaine de comportement stable du véhicule ($\Omega$ faible) et en augmentant ensuite très rapidement à l'approche du domaine de comportement instable en virage ($\Omega$ élevé).

Comme on l'a représenté schématiquement en figure 5, les efforts latéraux exercés par le sol sur les galets d'extrémités des chenilles du véhicule peuvent être déterminés au moyen de jauges de contrainte 36 fixées sur un bras de suspension 38 d'un galet 12, les jauges de contrainte 36 permettant de mesurer l'effort de flexion auquel est soumis le bras de suspension 38 et d'en déduire par un calcul de moments la force latérale (par exemple F1) exercée par le sol sur le galet 12, quand on connaît la force Fa exercée sur le galet par la tension de la chenille.

Le dispositif décrit en référence aux figures 3 à 5 fonctionne donc de la façon suivante :

les jauges de contrainte 36 montées sur les bras de suspension 38 des galets d'extrémités avant et arrière du véhicule fournissent aux moyens de calcul 32 des informations permettant de calculer le rapport des efforts latéraux exercés par le sol sur les galets d'extrémités avant et arrière du véhicule, et d'en déduire le gain d'amplification k de la vitesse angulaire instantanée de lacet du véhicule, fournie par le capteur gyrométrique 28. Le signal k$\Omega$ sortant du multiplicateur 30 est, après une éventuelle mise à niveau, soustrait du signal 24 de consigne de virage fourni par les moyens 20 en réponse à un ordre de virage 22 donné par le conducteur ou le pilote du véhicule. La différence entre le signal 24 de consigne de virage et le signal K$\Omega$ est appliquée aux moyens 26 de commande différentielle des chenilles, pour contrôler le virage du véhicule.

Lorsque les conditions de déplacement du véhicule sont telles qu'il se trouve dans son domaine de stabilité naturelle en virage, le gain d'amplification k a une valeur sensiblement nulle ou voisine de 0, et la contre-réaction de vitesse angulaire instantanée de lacet n'a sensiblement pas d'effet sur le signal 24 de consigne de virage, qui est appliqué tel quel aux moyens de commande 26. Le véhicule vire alors conformément à l'ordre de virage donné par le pilote ou le conducteur.

Par contre, si les conditions sont telles que l'on approche du domaine de comportement instable du véhicule en virage, le gain d'amplification k a une valeur voisine de 1 ou supérieure à 1, et le signal 24 de consigne de virage est réduit par la contre-réaction de la vitesse angulaire instantanée de lacet du véhicule, ce qui revient à effectuer automatiquement un "contre-braquage" du véhicule, qui s'oppose à son départ en survirage et le maintient sensiblement sur la trajectoire correspondant à l'ordre de virage donné par l'opérateur ou le conducteur.

On a représenté en figure 6 une variante de réalisation de l'invention, dans laquelle le gain d'amplification de la vitesse angulaire de lacet du véhicule est obtenu, non plus à partir des efforts latéraux exercés par le sol sur les galets extrêmes avant et arrière du véhicule, mais à partir des accélérations latérales du véhicule à l'avant et à l'arrière, de l'accélération angulaire de lacet du véhicule, et de l'effort différentiel appliqué aux chenilles en virage.

Le dispositif comprend alors deux accéléromètres linéaires 40 montés à l'avant et à l'arrière du véhicule pour déterminer les accélérations latérales de celui-ci. Des moyens 42 sont également prévus pour mesurer l'effort différentiel appliqué aux chenilles en virage, cet effort différentiel résultant de la commande de vitesse différentielle des chenilles et étant obtenu par exemple à partir d'une pression différentielle quand les moyens de commande 26 sont du type hydraulique.

Les signaux de sortie des accéléromètres 40 et des moyens 42 de mesure de l'effort différentiel sont appliqués aux entrées des moyens de calcul 32, qui fournissent en sortie un gain d'amplification k de la vitesse angulaire instantanée de lacet du véhicule délivrée par le capteur gyrométrique 28. Pour le reste, le dispositif est identique à celui de la figure 3.

La différence des accélérations latérales mesurées par les capteurs à l'avant et à l'arrière du véhicule permet de déterminer l'accélération angulaire de lacet du véhicule, par division de cette différence par la longueur du véhicule.

La moyenne de ces deux accélérations latérales fournit l'accélération linéaire latérale du centre de gravité du véhicule.

Les relations suivantes permettent de déterminer le gain k d'amplification de la vitesse angulaire instantanée de lacet du véhicule :

$\dot{\Omega}$ = (ÿ1 - ÿ5) / L

ÿ = (ÿ1 + ÿ5) / 2

k = a + (Mÿ x 2d + $\dot{\Omega}$I - ΔF x D/2)/(Mÿ x 2d - $\dot{\Omega}$I + ΔF x D/2)

avec

ÿ1 = accélération linéaire latérale à l'avant du véhicule

ÿ5 = accélération linéaire latérale à l'arrière du véhicule

L = longueur du véhicule

$\dot{\Omega}$ = accélération angulaire de lacet

ÿ = accélération linéaire latérale au centre de gravité du véhicule

M = masse du véhicule

d = distance entre les axes de deux galets consécutifs

I = inertie de lacet du véhicule

ΔF = effort différentiel appliqué aux chenilles

D = distance entre les axes des chenilles

a = constante

Ce gain varie sensiblement comme celui obtenu à partir du rapport F1/F5 dans le premier mode de réalisation de l'invention.

En variante, on peut utiliser un accéléromètre angulaire pour mesurer l'accélération angulaire de lacet du véhicule. On peut alors utiliser un seul accéléromètre linéaire pour mesurer l'accélération linéaire latérale au centre de gravité du véhicule.

Selon une autre variante de réalisation de l'invention, il est également possible de calculer le gain d'amplification k à partir de la vitesse angulaire de lacet du véhicule fournie par le capteur gyrométrique 28, de la vitesse d'avancement du véhicule, et de l'effort différentiel appliqué aux chenilles. Dans ce cas, le signal de vitesse angulaire de lacet du véhicule est appliqué à une entrée des moyens de calcul 32 comme représenté en traits pointillés en figure 6, une autre entrée de ces moyens de calcul recevant un signal représentant la vitesse d'avancement du véhicule. La dérivation du signal de vitesse angulaire de lacet permet d'obtenir l'accélération angulaire de lacet du véhicule et le filtrage passe-bas du produit de la vitesse angulaire de lacet par la vitesse d'avancement du véhicule permet d'obtenir l'accélération linéaire latérale du centre de gravité du véhicule. On est ainsi ramené au cas précédent, le gain d'amplification k étant donné par la même équation en fonction de l'accélération latérale au centre de gravité du véhicule, de l'accélération angulaire de lacet et de l'effort différentiel de commande des chenilles. Cette variante évite de monter des accéléromètres linéaires et/ou angulaires sur le véhicule.

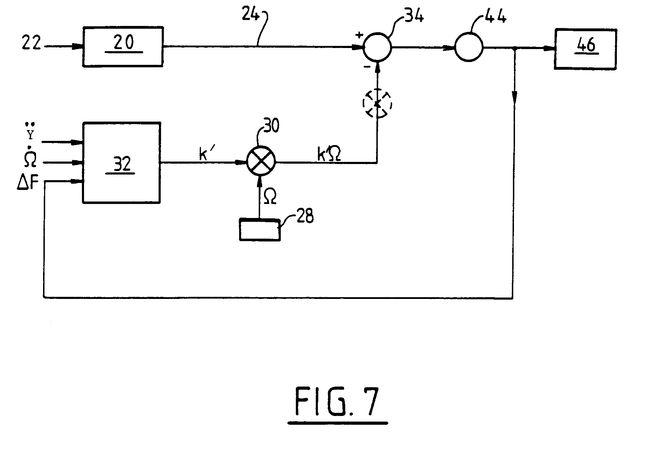

La figure 7 représente schématiquement un dispositif selon l'invention pour un véhicule chenillé équipé d'un système de commande de virage par pilotage de l'effort différentiel des chenilles, par exemple au moyen d'un frein de direction dont le serrage permet de régler le couple différentiel des chenilles.

Ce dispositif selon l'invention correspond pour l'essentiel à celui de la figure 6, les moyens de calcul 32 recevant en entrée un signal ÿ représentant l'accélération linéaire latérale du véhicule, un signal $\dot{\Omega}$ représentant l'accélération angulaire de lacet et un signal ΔF représentant l'effort différentiel de commande des chenilles. Les moyens de calcul 32 génèrent à partir de ces signaux un gain k' d'amplification de la vitesse angulaire instantanée de lacet fournie par le capteur gyrométrique 28. Le signal 24 de consigne de virage et le signal k' $\Omega$ de sortie du multiplicateur 30 sont appliqués aux entrées du soustracteur 34 qui transmet leur différence à des moyens 44 transformant cette différence (correspondant à une vitesse angulaire) en un signal d'effort différentiel ΔF appliqué au système 46 de commande de direction.

Comme représenté en figure 7, ce signal d'effort différentiel ΔF peut également être appliqué à l'entrée des moyens de calcul 32, pour la détermination du gain k'.

Ce gain k' est calculé au moyen de la formule donnée pour le mode de réalisation de la figure 6, mais avec une constante a' supérieure à a pour renforcer la contre-réaction de vitesse angulaire de lacet appliquée au signal de consigne de virage, un véhicule à commande de virage par pilotage de l'effort différentiel des chenilles ayant un comportement instable dès que l'on sort du domaine dans lequel le couple de virage augmente lorsque le virage se resserre.

L'invention, qui a été décrite ci-dessus dans le cas d'un véhicule chenillé, s'applique également aux véhicules à roues non directrices.

## Revendications

1. Procédé de commande du virage d'un véhicule chenillé ou à roues non directrices, qui comprend des moyens (26, 46) de commande différentielle des chenilles ou des roues, caractérisé en ce qu'il consiste à produire un signal (24) de consigne de virage, destiné à être transmis aux moyens (26, 46) de commande précités, à partir d'un ordre de virage (22) donné par un opérateur ou un conducteur du véhicule, à détecter la vitesse angulaire instantanée de lacet du véhicule, à amplifier le signal représentant cette vitesse détectée avec un gain déterminé, à comparer le signal ainsi amplifié au signal de consigne (24), et à transmettre leur différence aux moyens de commande (26, 46) précités, afin d'assurer la stabilité du virage du véhicule en effectuant automatiquement un contre-braquage à la détection d'un début de survirage du véhicule.

2. Procédé selon la revendication 1, caractérisé en ce qu'il consiste à faire varier le gain d'amplification du signal de vitesse angulaire de lacet, ce gain ayant une valeur sensiblement nulle pour un domaine de comportement naturellement stable du véhicule en virage, et augmentant rapidement à l'approche d'un domaine de comportement instable du véhicule en virage.

3. Procédé selon la revendication 1 ou 2, caractérisé en ce qu'il consiste à déterminer le gain d'amplification du signal de vitesse angulaire de lacet à partir du rapport entre les efforts latéraux (F1, F5) exercés par le sol sur les roues d'extrémités ou sur les galets d'extrémités des chenilles du véhicule, respectivement à l'avant et à l'arrière du véhicule.

4. Procédé selon la revendication 3, caractérisé en ce qu'il consiste à déterminer les efforts latéraux (F1, F5) précités par mesure des efforts de flexion des bras (38) de suspension des roues d'extrémités ou des galets d'extrémités des chenilles du véhicule.

5. Procédé selon la revendication 1 ou 2, caractérisé en ce qu'il consiste à déterminer le gain d'amplification précité à partir de l'accélération linéaire latérale du véhicule, de son accélération angulaire de lacet, et de l'effort différentiel de commande des roues ou des chenilles du véhicule en virage.

6. Procédé selon la revendication 5, caractérisé en ce qu'il consiste à mesurer les accélérations linéaires latérales à l'avant et à l'arrière du véhicule, et à en déduire par calcul l'accélération linéaire latérale du centre de gravité du véhicule et l'accélération angulaire de lacet du véhicule.

7. Procédé selon la revendication 5, caractérisé en ce qu'il consiste à détecter et mesurer l'accélération linéaire latérale du centre de gravité du véhicule et l'accélération angulaire de lacet du véhicule.

8. Procédé selon l'une des revendications précédentes, caractérisé en ce qu'il consiste à mesurer la vitesse angulaire instantanée de lacet du véhicule, au moyen d'un capteur gyrométrique.

9. Dispositif de commande du virage d'un véhicule chenillé ou à roues non directrices, le véhicule comprenant des moyens (26, 46) de commande différentielle des chenilles ou des roues, ce dispositif étant caractérisé en ce qu'il comprend des moyens (20) de génération d'un signal (24) de consigne de virage, correspondant à un ordre de virage (22) donné par un opérateur ou un conducteur, des moyens gyrométriques (28) de détection de la vitesse angulaire instantanée de lacet du véhicule et de génération d'un signal correspondant, des moyens (30) d'amplification de ce signal de vitesse angulaire de lacet avec un gain déterminé, des moyens (30) d'établissement de la différence entre le signal (24) de consigne de virage et ce signal amplifié de vitesse angulaire de lacet, cette différence étant transmise aux moyens (26, 46) de commande précités, pour assurer la stabilité du virage du véhicule en effectuant automatiquement un contre-braquage à la détection d'un début de survirage du véhicule.

**10.** Dispositif selon la revendication 9, caractérisé en ce qu'il comprend des moyens (32) de génération d'un gain variable d'amplification du signal de vitesse angulaire de lacet, ce gain ayant une valeur sensiblement nulle pour un domaine de virages naturellement stables du véhicule, et augmentant rapidement à l'approche d'un domaine de virages instables du véhicule.

**11.** Dispositif selon la revendication 10, caractérisé en ce que les moyens de génération de gain comprennent des moyens (32, 36) de détermination des efforts latéraux (F1, F5) exercés par le sol sur les roues d'extrémités ou les galets d'extrémités des chenilles à l'avant et à l'arrière du véhicule, et de calcul du rapport de ces efforts latéraux à l'avant et à l'arrière du véhicule.

**12.** Dispositif selon la revendication 11, caractérisé en ce que les moyens de détermination desdits efforts latéraux (F1, F5) comprennent des jauges de contrainte (36) fixées sur les bras (38) de suspension des roues ou des galets des chenilles.

**13.** Dispositif selon la revendication 10, caractérisé en ce que les moyens de génération de gain comprennent des moyens de détermination ou de mesure de l'accélération linéaire latérale du véhicule et de son accélération angulaire de lacet, des moyens (42) de mesure de l'effort différentiel de commande des roues ou des chenilles du véhicule en virage, et des moyens (32) de calcul du gain d'amplification à partir de l'accélération linéaire latérale, de l'accélération angulaire de lacet et de l'effort différentiel de commande des roues ou des chenilles.

**14.** Dispositif selon la revendication 13, caractérisé en ce qu'il comprend au moins un accéléromètre (40) de mesure de ladite accélération linéaire latérale du véhicule.

**15.** Dispositif selon la revendication 13 ou 14, caractérisé en ce qu'il comprend un accéléromètre de mesure de l'accélération angulaire de lacet du véhicule.

**16.** Dispositif selon la revendication 13, caractérisé en ce que les moyens de calcul (32) sont conçus pour déterminer ladite accélération linéaire latérale du véhicule et son accélération angulaire de lacet à partir de sa vitesse angulaire de lacet et de sa vitesse d'avancement.

## Claims

**1.** A method of controlling the steering of a vehicle that is tracked or that has non-steerable wheels, the vehicle including differential control means (26, 46) for applying differential control to the tracks or to the wheels, the method being characterized in that it consists in producing a steering command signal (24) for application to the above-mentioned control means (26, 26) on the basis of a steering instruction (22) given by an operator or a driver of the vehicle, in detecting the instantaneous angular velocity in yaw of the vehicle, in amplifying with determined gain the signal representative of said detected velocity, in comparing the signal amplified in this way with the steering command signal (24), and in transmitting the difference between them to the above-mentioned control means (26, 46) in order to ensure that the vehicle is stable while turning by automatically applying a steering correction on detecting the beginning of vehicle oversteer.

**2.** A method according to claim 1, characterized in that it consists in causing the gain with which the signal representative of angular velocity in yaw is amplified to vary such that such steering gain has a value of substantially zero for a range in which the behavior of the vehicle is naturally stable, which value increases rapidly on coming close to a range in which the steering behavior of the vehicle is unstable.

**3.** A method according to claim 1 or 2, characterized in that it consists in determining the amplification gain applied to the signal representative of angular velocity in yaw on the basis of the ratio of the sideways forces (F1, F5) exerted by the ground on the wheels or the track wheels at opposite ends of the vehicle, respectively at the front of the vehicle and at the back of the vehicle.

**4.** A method according to claim 3, characterized in that it consists in determining the above-mentioned sideways forces (F1, F5) by measuring the bending forces in the suspension arms (38) for the wheels or track wheels at the ends of the vehicle.

**5.** A method according to claim 1 or 2, characterized in that it consists in determining the above-mentioned amplification gain on the basis of the sideways linear acceleration of the vehicle, of its angular acceleration in yaw, and of the force differential for controlling the wheels or the tracks of the vehicle while steering.

6. A method according to claim 5, characterized in that it consists in measuring the lateral linear accelerations at the front and at the back of the vehicle, and in deducing therefrom by calculation the sideways linear acceleration of the center of gravity of the vehicle, and the angular acceleration in yaw of the vehicle.

7. A method according to claim 5, characterized in that it consists in detecting and in measuring the sideways linear acceleration of the center of gravity of the vehicle and the angular acceleration in yaw of the vehicle.

8. A method according to any preceding claim, characterized in that it consists in measuring the instantaneous angular velocity in yaw of the vehicle, by means of a rate gyro sensor.

9. Apparatus for controlling the steering of a vehicle that has tracks or non-steerable wheels, the vehicle including differential control means (26, 46) for controlling its tracks or its wheels, said apparatus being characterized in that it comprises means (20) for generating a steering command signal (24) corresponding to a steering instruction (22) given by an operator or a driver, rate gyro means (28) for detecting the instantaneous angular velocity in yaw of the vehicle and for generating a corresponding signal, means (30) for amplifying said angular velocity in yaw signal by a determined gain, and means (30) for establishing the difference between the steering command signal and the amplified angular velocity in yaw signal, said difference between transmitted to the above-mentioned control means (26, 46), in order to ensure that the vehicle is stable in steering by automatically applying a steering correction on detecting the beginning of vehicle oversteer.

10. Apparatus according to claim 9, characterized in that it includes gain generation means (32) for generating a variable amplification gain for application to the angular velocity signal in yaw, said gain having a value of substantially zero for a range in which the steering of the vehicle is naturally stable, and increasing rapidly on approaching a range in which the steering of the vehicle is unstable.

11. Apparatus according to claim 10, characterized in that the gain generation means comprise means (32, 36) for determining the sideways forces (F1, F5) exerted by the ground on the wheels or the track wheels at the front and at the back ends of the vehicle, and for calculating the ratio of said sideways forces at the front and at the back of the vehicle.

12. Apparatus according to claim 11, characterized in that the means for determining said sideways forces (F1, F5) comprise strain gauges (36) fixed to the suspension arms (38) for the wheels or the track wheels.

13. Apparatus according to claim 10, characterized in that the gain generation means comprise means for determining or for measuring the sideways linear acceleration of the vehicle and its angular acceleration in yaw, means (42) for measuring the differential control force applied to the wheels or the tracks of the vehicle while steering, and means (32) to calculate an amplification gain on the basis of the sideways linear acceleration, of the angular acceleration in yaw, and of the differential control force applied to the wheels or of the tracks.

14. Apparatus according to claim 13, characterized in that it includes at least one accelerometer (40) for measuring said sideways linear acceleration of the vehicle.

15. Apparatus according to claim 13 or 14, characterized in that it includes an accelerometer for measuring the angular acceleration in yaw of the vehicle.

16. Apparatus according to claim 13, characterized in that the calculation means (32) are designed to determine said sideways linear acceleration of the vehicle and its angular acceleration in yaw on the basis of its angular velocity in yaw and of its forwards speed.

## Patentansprüche

1. Verfahren zur Kurvensteuerung eines Fahrzeugs mit Raupenketten oder mit nicht-gelenkten Rädern, welches Einrichtungen (26, 46) zur Differentialsteuerung der Ketten oder der Räder umfaßt, dadurch gekennzeichnet, daß es darin besteht, ein Signal (24) zur Schwenkungseinstellung, welches bestimmt ist, an die vorerwähnten Einrichtungen (26, 46) zur Steuerung übertragen zu werden, auf der Grundlage von einem durch einen Benutzer oder einen Führer des Fahrzeugs gegebenen Befehl (22) zur Schwenkung zu erzeugen, die momentane Gierwinkelgeschwindigkeit des Fahrzeugs zu ermitteln, das diese ermittelte Geschwindigkeit darstellende Signal mit einem bestimmten Verstärkungsfaktor zu verstärken, das so verstärkte Signal mit dem Signal (24) zur Anweisung zu vergleichen und deren Differenz an die vorerwähnten Einrichtungen (26, 46) zur Steuerung zu übertragen, um so die Kurvenstabilität

8

des Fahrzeugs sicherzustellen, indem automatisch ein Gegenlenkungseinschlag bei der Ermittlung eines Beginns einer Überschwenkung des Fahrzeugs bewirkt wird.

2. Verfahren nach Anspruch 1, dadurch gekennzeichnet, daß es darin besteht, den Verstärkungsfaktor zur Verstärkung des Gierwinkelgeschwindigkeitssignales variieren zu lassen, wobei dieser Verstärkungsfaktor einen Wert im wesentlichen null für einen Bereich eines natürlicherweise stabilen Verhaltens des sich in Schwenkung befindlichen Fahrzeugs aufweist und bei der Annäherung an einen Bereich eines instabilen Verhaltens des sich in Schwenkung befindlichen Fahrzeugs schnell erhöht.

3. Verfahren nach Anspruch 1 oder 2, dadurch gekennzeichnet, daß es darin besteht, den Verstärkungsfaktor zur Verstärkung des Gierwinkelgeschwindigkeitssignales auf der Grundlage des Verhältnisses zwischen den durch den Boden auf die Außenräder oder auf die Außenrollen der Ketten des Fahrzeugs bzw. im vorderen Bereich und im hinteren Bereich des Fahrzeugs erzeugten Seitenkräfte (F1, F5) zu bestimmen.

4. Verfahren nach Anspruch 3, dadurch gekennzeichnet, daß es darin besteht, die vorerwähnten Seitenkräfte (F1, F5) durch Messung der Biegespannungen der Schenkel (38) zur Aufhängung der Außenräder oder der Außenrollen der Ketten des Fahrzeugs zu bestimmen.

5. Verfahren nach Anspruch 1 oder 2, dadurch gekennzeichnet, daß es darin besteht, den vorerwähnten Verstärkungsfaktor zur Verstärkung auf der Grundlage von der seitlichen Linearbeschleunigung des Fahrzeugs, von dessen Gierwinkelbeschleunigung und von der Differentialkraft zur Steuerung der Räder oder Ketten des sich in Schwenkung befindlichen Fahrzeugs zu bestimmen.

6. Verfahren nach Anspruch 5, dadurch gekennzeichnet, daß es darin besteht, die seitlichen Linearbeschleunigungen im vorderen Bereich und im hinteren Bereich des Fahrzeugs zu messen und durch Berechnung die seitliche Linearbeschleunigung des Schwerpunktes des Fahrzeugs und die Gierwinkelbeschleunigung des Fahrzeugs abzuleiten.

7. Verfahren nach Anspruch 5, dadurch gekennzeichnet, daß es darin besteht, die seitliche Linearbeschleunigung des Schwerpunktes des Fahrzeugs und die Gierwinkelbeschleunigung des Fahrzeugs zu ermitteln und zu messen.

8. Verfahren nach einem der vorhergehenden Ansprüche, dadurch gekennzeichnet, daß es darin besteht, die momentane Gierwinkelgeschwindigkeit des Fahrzeugs mittels eines gyrometrischen Sensors zu messen.

9. Vorrichtung zur Kurvensteuerung eines Fahrzeugs mit Raupenketten oder mit nicht-gelenkten Rädern, wobei das Fahrzeug Einrichtungen (26, 46) zur Differentialsteuerung der Ketten oder der Räder umfaßt, wobei die Vorrichtung dadurch gekennzeichnet ist, daß sie Einrichtungen (20) zur Erzeugung eines Signales (24) zur Schwenkungseinstellung, welches einem durch einen Benutzer oder einen Führer gegebenen Befehl (22) zur Schwenkung entspricht, gyrometrische Einrichtungen (28) zur Ermittlung der momentanen Gierwinkelgeschwindigkeit des Fahrzeugs und zur Erzeugung eines korrespondierenden Signales, Einrichtungen (30) zur Verstärkung dieses Gierwinkelgeschwindigkeitssignales mit einem bestimmten Verstärkungsfaktor, Einrichtungen (30) zur Bestimmung der Differenz zwischen dem Signal (24) zur Schwenkungseinstellung und diesem verstärktem Gierwinkelgeschwindigkeitssignal umfaßt, wobei diese Differenz an die vorerwähnten Einrichtungen (26, 46) zur Steuerung übertragen werden, um die Kurvenstabilität des Fahrzeugs sicherzustellen, indem automatisch ein Gegenlenkungseinschlag bei der Ermittlung eines Beginns einer Überschwenkung des Fahrzeugs bewirkt wird.

10. Vorrichtung nach Anspruch 9, dadurch gekennzeichnet, daß es Einrichtungen (32) zur Erzeugung eines variablen Verstärkungsfaktors zur Verstärkung des Gierwinkelgeschwindigkeitssignales umfaßt, wobei dieser Verstärkungsfaktor einen Wert im wesentlichen null für einen Bereich von natürlicherweise stabilen Schwenkungen des Fahrzeugs aufweist und bei der Annäherung an einen Bereich von instabilen Schwenkungen des Fahrzeugs schnell erhöht.

11. Vorrichtung nach Anspruch 10, dadurch gekennzeichnet, daß die Einrichtungen zur Erzeugung eines Verstärkungsfaktors Einrichtungen (32, 36) zur Bestimmung von durch den Boden auf die Außenräder oder die Außenrollen der Ketten im vorderen Bereich und im hinteren Bereich des Fahrzeugs erzeugten Seitenkräften (F1, F5) und zur Berechnung des Verhältnisses dieser Seitenkräfte im vorderen Bereich und im hinteren Bereich des Fahrzeugs umfaßt.

12. Vorrichtung nach Anspruch 11, dadurch gekennzeichnet, daß die Einrichtungen zur Bestimmung der Seitenkräfte (F1, F5) Dehnmeßstreifen (36) umfassen, die an den Schenkeln (38) zur Aufhängung der Räder oder der Rollen der Ketten befestigt sind.

13. Vorrichtung nach Anspruch 10, dadurch gekennzeichnet, daß die Einrichtungen zur Erzeugung eines Verstärkungsfaktors Einrichtungen zur Bestimmung oder zur Messung der seitlichen Linearbeschleunigung des Fahrzeugs und dessen Gierwinkelbeschleunigung, Einrichtungen (42) zur Messung der Differentialkraft zur Steuerung der Räder oder der Ketten des sich in Schwenkung befindlichen Fahrzeugs und Einrichtungen (32) zur Berechnung des Verstärkungsfaktors zur Verstärkung auf der Grundlage von der seitlichen Linearbeschleunigung, von der Gierwinkelbeschleunigung und von der Differentialkraft zur Steuerung der Räder und der Ketten umfassen.

14. Vorrichtung nach Anspruch 13, dadurch gekennzeichnet, daß sie wenigstens einen Beschleunigungsmesser (40) zur Messung der seitlichen Linearbeschleunigung des Fahrzeugs umfaßt.

15. Vorrichtung nach Anspruch 13 oder 14, dadurch gekennzeichnet, daß sie einen Beschleunigungsmesser zur Messung der Gierwinkelbeschleunigung des Fahrzeugs umfaßt.

16. Vorrichtung nach Anspruch 13, dadurch gekennzeichnet, daß die Einrichtungen (32) zur Berechnung ausgebildet sind, um die seitliche Linearbeschleunigung des Fahrzeugs und dessen Gierwinkelbeschleunigung auf der Grundlage von dessen Gierwinkelgeschwindigkeit und dessen Fahrgeschwindigkeit zu bestimmen.

FIG.1

FIG.2

FIG.3

FIG.4

FIG.5

FIG.6

FIG. 7